# EUROPEAN PATENT APPLICATION

(11) **EP 4 727 043 A1**
(43) Date of publication of application: **15.04.2026**
(21) Application number: 24835375.7
(22) Date of filing: 03.07.2024
(51) Int. Cl.: H04L 1/00

(54) **CODE BLOCK PROCESSING METHOD AND APPARATUS, DEVICE, AND READABLE STORAGE MEDIUM**

(30) Priority: 06.07.2023 CN 202310827155
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: HAN, Liuyan, Beijing 100053 (CN)
(74) Representative: GPI Brevets
(86) International application number: PCT/CN2024/103395
(87) International publication number: WO 2025/007895

(57) **Abstract**

A block processing method, a block processing apparatus, device, and a readable storage medium are provided, and relate to the field of communications technology, to ensure reliability of an MTN. The method includes: when an MTN path block carrying a fine grain MTN (fgMTN) path is error-marked, or the block includes an invalid synchronization header, or the block is a control block with an invalid type field, or the block is an error block, replacing the fgMTN path block carried within the MTN path block with an error block. Embodiments of the present application can ensure the reliability of the MTN.

## Description

### CROSS-REFERENCE TO RELATED APPLICATION

The present application is based on and claims the priority to Chinese patent application No. 202310827155.1 filed on July 6, 2023, a disclosure of which is incorporated herein by reference in its entirety.

### TECHNICAL FIELD

The present application relates to the field of communications technology, and in particular, to a block processing method, a block processing apparatus, a device and a readable storage medium.

### BACKGROUND

With a development of 5G and an increase in vertical industry users, a demand for network slicing is increasing. The industry has conducted many beneficial explorations in slicing isolation technologies based on Ethernet. A Metro Transport Network (MTN) is a new transport network technology system defined to meet new service requirements such as 5G.

The MTN consists of a Metro Transport Network Section layer and a Metro Transport Network Path layer. At the section layer, the MTN technology supports path division and slicing with a minimum grain of 5Gbps. At the section layer, the MTN reuses the frame format of Flexible Ethernet (FlexE). The basic data unit frame format at the section layer consists of one overhead 64B/66B block and 20460 payload 64B/66B blocks.

Currently, above the MTN path layer, a MTN slice path with smaller bandwidth grain is provided, referred to as a fine grain MTN (fgMTN). The fgMTN adds an fgMTN layer to the structure of the MTN Path (MTNP) layer, in which a bitstream is composed of the fgMTN unit structures and Operation, Administration, and Maintenance (OAM) blocks and idle blocks between the unit structures. In the fgMTN processing procedure, a processing method for error identification needs to be considered.

### SUMMARY

Embodiments of the present application provide a block processing method, a block processing apparatus, a device, and a readable storage medium, to ensure the reliability of a Metro Transport Network (MTN).

In a first aspect, embodiments of the present application provide a block processing method, performed by a MTN node, including:
when an MTN path block carrying a fine grain MTN (fgMTN) path is error-marked, or the block includes an invalid synchronization header, or the block is a control block with an invalid type field, or the block is an error block, replacing the fgMTN path block carried within the MTN path block with an error block.

Optionally, replacing the fgMTN path block carried within the MTN path block with the error block includes:
replacing one or more fgMTN path client blocks carried within the MTN path block with the error blocks (E blocks).

Optionally, the method further includes:
placing the error block into a termination block (T block) or a data block (D block) used to carry the client block, to obtain a first target fgMTN unit.

Optionally, the method further includes:
transmitting the first target fgMTN unit.

Optionally, the MTN node is configured with a Forward Error Correction (FEC) function, and the method further includes:
in the case that an exception is detected in an FEC codeword length, replacing a 66B block within an FEC codeword length range with the error block.

In a second aspect, embodiments of the present application provide a block processing method, performed by a Metro Transport Network (MTN) node, including:
receiving a second target fine grain MTN (fgMTN) unit;
in the case that an exception occurs in a target block of the second target fgMTN unit, processing the target block; wherein
the target block includes one or more of the following: a start block (S block), a data block (D block), or a termination block (T block).

Optionally, the target block includes the start block; and processing the target block includes:
in the case that a synchronization header error of the start block occurs, discarding the second target fgMTN unit; or
in the case that a synchronization header error of the start block occurs, when the target block is determined to be the start block by a determination mechanism, reading the second target fgMTN unit; or
in the case that a block type field error of the start block occurs, discarding the second target fgMTN unit; or
in the case that a block type field error of the start block occurs, when the target block is determined to be the start block by a determination mechanism, reading the second target fgMTN unit.

Optionally, the target block includes the data block; and processing the target block includes:
in the case that a synchronization header error of the data block occurs:
when the data block carries fgMTN path client information, replacing one or more fgMTN path client blocks carried within a 64-bit payload of the data block with error blocks; or
when the data block carries overhead information, discarding the overhead information.

Optionally, the target block includes the termination block; and processing the target block includes:
in the case that a block type field error or a synchronization header error of the termination block occurs:
when the termination block carries fgMTN path client information, replacing one fgMTN path client block carried within a 64-bit payload of the termination block with an error block; or
when the termination block carries overhead information, discarding the overhead information.

In a third aspect, embodiments of the present application provide a block processing apparatus, applied to a Metro Transport Network (MTN) node, including:
a first processing module, configured to, when an MTN path block carrying a fine grain MTN (fgMTN) path is error-marked, or the block includes an invalid synchronization header, or the block is a control block with an invalid type field, or the block is an error block, replace the fgMTN path block carried within the MTN path block with an error block.

Optionally, the first processing module is further configured to replace one or more fgMTN path client blocks carried within the MTN path block with the error blocks.

Optionally, the apparatus may further include:
a second processing module, configured to replace the error block used to carry the client block with a data block or a termination block, to obtain a first target fgMTN unit.

Optionally, the apparatus may further include:
a transmitting module, configured to transmit the first target fgMTN unit.

Optionally, the MTN node is configured with a Forward Error Correction (FEC) function, and the apparatus may further include:
a third processing module, configured to, in the case that an exception is detected in an FEC codeword length, replace a 66B block within an FEC codeword length range with the error block.

In a fourth aspect, embodiments of the present application provide a block processing apparatus, applied to a Metro Transport Network (MTN) node, including:
a first receiving module, configured to receive a second target fine grain MTN (fgMTN) unit;
a first processing module, configured to, in the case that an exception occurs in a target block of the second target fgMTN unit, process the target block; wherein
the target block includes one or more of the following: a start block, a data block, or a termination block.

Optionally, the target block includes the start block; the first processing module is further configured to:
in the case that a synchronization header error of the start block occurs, discard the second target fgMTN unit; or
in the case that a synchronization header error of the start block occurs, when the target block is determined to be the start block by a determination mechanism, read the second target fgMTN unit; or
in the case that a block type field error of the start block occurs, discard the second target fgMTN unit; or
in the case that a block type field error of the start block occurs, when the target block is determined to be the start block by a determination mechanism, read the second target fgMTN unit.

Optionally, the target block includes the data block; the first processing module is further configured to:
in the case that a synchronization header error of the data block occurs:
when the data block carries fgMTN path client information, replace one or more fgMTN path client blocks carried within a 64-bit payload of the data block with error blocks; or
when the data block carries overhead information, discard the overhead information.

Optionally, the target block includes the termination block; the first processing module is further configured to:
in the case that a block type field error or a synchronization header error of the termination block occurs:
when the termination block carries fgMTN path client information, replace one fgMTN path client block carried within a 64-bit payload of the termination block with an error block; or
when the termination block carries overhead information, discard the overhead information.

In a fifth aspect, embodiments of the present application provide a block processing apparatus, applied to a Metro Transport Network (MTN) node, including: a processor and a transceiver;
the processor is configured to, when an MTN path block carrying a fine grain MTN (fgMTN) path is error-marked, or the block includes an invalid synchronization header, or the MTN path block is a control block with an invalid type field, or the MTN path block is an error block, replace the fgMTN path block carried within the MTN path block with an error block.

Optionally, the processor is further configured to:
replace one or more fgMTN path client blocks carried within the MTN path block with the error blocks.

Optionally, the processor is further configured to:
replace the error block used to carry the client block with a data block or a termination block, to obtain a first target fgMTN unit.

Optionally, the processor is further configured to:
transmit the first target fgMTN unit.

Optionally, the MTN node is configured with a Forward Error Correction (FEC) function, and the processor is further configured to:
in the case that an exception is detected in an FEC codeword length, replace a 66B block within an FEC codeword length range with the error block.

In a sixth aspect, embodiments of the present application provide a block processing apparatus, applied to a Metro Transport Network (MTN) node, including: a processor and a transceiver;
the transceiver is configured to receive a second target fine grain MTN (fgMTN) unit;
the processor is configured to, in the case that an exception occurs in a target block of the second target fgMTN unit, process the target block; wherein
the target block includes one or more of the following: a start block, a data block, or a termination block.

Optionally, the target block includes the start block; the processor is further configured to:
in the case that a synchronization header error of the start block occurs, discard the second target fgMTN unit; or
in the case that a synchronization header error of the start block occurs, when the target block is determined to be the start block by a determination mechanism, read the second target fgMTN unit; or
in the case that a block type field error of the start block occurs, discard the second target fgMTN unit; or
in the case that a block type field error of the start block occurs, when the target block is determined to be the start block by a determination mechanism, read the second target fgMTN unit.

Optionally, the target block includes the data block; the processor is further configured to:
in the case that a synchronization header error of the data block occurs:
when the data block carries fgMTN path client information, replace one or more fgMTN path client blocks carried within a 64-bit payload of the data block with error blocks; or
when the data block carries overhead information, discard the overhead information.

Optionally, the target block includes the termination block; the processor is further configured to:
in the case that a block type field error or a synchronization header error of the termination block occurs:
when the termination block carries fgMTN path client information, replace one fgMTN path client block carried within a 64-bit payload of the termination block with an error block; or
when the termination block carries overhead information, discard the overhead information.

In a seventh aspect, embodiments of the present application further provide a communication device, including: a memory, a processor, and a program stored in the memory and used to be executed by the processor; wherein the processor is configured to execute the program to implement the steps of the block processing method as described above.

In an eighth aspect, embodiments of the present application further provide a readable storage medium for storing a program, wherein the program is used to be executed by a processor to implement the steps of the block processing method as described above.

In the embodiments of the present application, a processing method for error identification for fgMTN path blocks is proposed, thereby effectively ensuring the reliability of fgMTN technology.

### BRIEF DESCRIPTION OF THE DRAWINGS

FIG. 1 is a flowchart of a block processing method provided in an embodiment of the present application;
FIG. 2 is a schematic diagram of block processing according to an embodiment of the present application;
FIG. 3 is another schematic diagram of block processing according to an embodiment of the present application;
FIG. 4 is another flowchart of a block processing method provided in an embodiment of the present application;
FIG. 5 is a schematic diagram of a block structure;
FIG. 6 is a structural diagram of a block processing apparatus provided in an embodiment of the present application;
FIG. 7 is another structural diagram of a block processing apparatus provided in an embodiment of the present application;
FIG. 8 is yet another structural diagram of a block processing apparatus provided in an embodiment of the present application;
FIG. 9 is still yet another structural diagram of a block processing apparatus provided in an embodiment of the present application.

### DETAILED DESCRIPTION

In the embodiments of the present application, the term "and/or" describes the association relationship between associated objects, indicating that there can be three relationships, for example, A and/or B can mean: A exists alone, A and B exist simultaneously, and B exists alone. Additionally, the symbol "/" generally indicates that the associated objects are in an "or" relationship.

In the embodiments of the present application, the term "plurality" refers to two or more than two, and other quantifiers are similar to it.

The technical solutions in the embodiments of the present application will be clearly and thoroughly described below with reference to the accompanying drawings in the embodiments of the present application. Obviously, the described embodiments are only some of the embodiments of the present application, not all of them. Based on the embodiments in this application, all other embodiments obtained by those of ordinary skill in the art without making creative efforts fall within the scope of this application.

As described in the background, the fgMTN adds an fgMTN layer to the structure of the MTNP layer, in which a bitstream is composed of the fgMTN unit structures and OAM blocks and IDLE blocks between the unit structures. In the fgMTN processing procedure, it is necessary to consider how to handle errors in blocks received by a node. Unlike the characteristics of known transmission technology systems, an fgMTN unit structure consists of 66B blocks, but client information is not directly incorporated into the fgMTN unit; instead, it is placed in a data byte portion of an fgMTN unit block. Therefore, the error block identification mechanism needs to consider both the processing of outer fgMTN unit blocks and inner client signal blocks, as well as the interaction between them.

For this purpose, an embodiment of the present application provides a block processing method, which proposes a processing method for error identification and a handling mechanism for abnormal conditions, thereby ensuring the reliability of the MTN network and the uniformity of abnormal conditions handling.

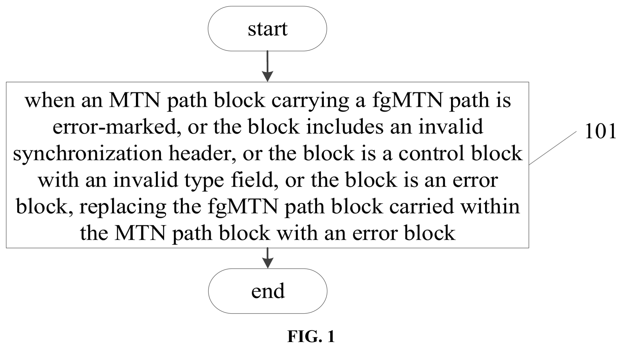

Referring to FIG. 1, which is a flowchart of a block processing method provided in an embodiment of the present application and applied to a Metro Transport Network (MTN) node. As shown in FIG. 1, the method includes the following steps:
step 101: when an MTN path block carrying a fine grain MTN (fgMTN) path is error-marked, or the block includes an invalid synchronization header, or the block is a control block with an invalid type field, or the block is an error block, replacing the fgMTN path block carried within the MTN path block with an error block.

Specifically, in this step, one or more fgMTN path client blocks carried within the MTN path block are replaced with error blocks. That is, one block at the MTN path layer may correspond to and carry one or more fgMTN path client blocks, and these one or more fgMTN path client blocks are all replaced with error blocks (E blocks). Here, the fgMTN path block is the block corresponding to the fgMTN path.

Here, a block being error-marked refers to marking a problematic block as an error at the MTN section layer, for example, by changing the synchronization header to "11". A block containing an invalid synchronization header means that, according to the IEEE 802.3 block format, the first 2 bits of the synchronization header of a 66-bit block (66B block) should have a value of "01" or "10"; if it is any other value (e.g., "11" or "00"), the synchronization header is invalid. A control block with an invalid type field refers to a control block (e.g., T1 to T7 blocks) whose block type field, located after the 2-bit synchronization header, includes a value that does not comply with the IEEE 802.3 block format, making it an invalid type field. An error block refers to an E block as defined among the 66B block types specified in IEEE 802.3.

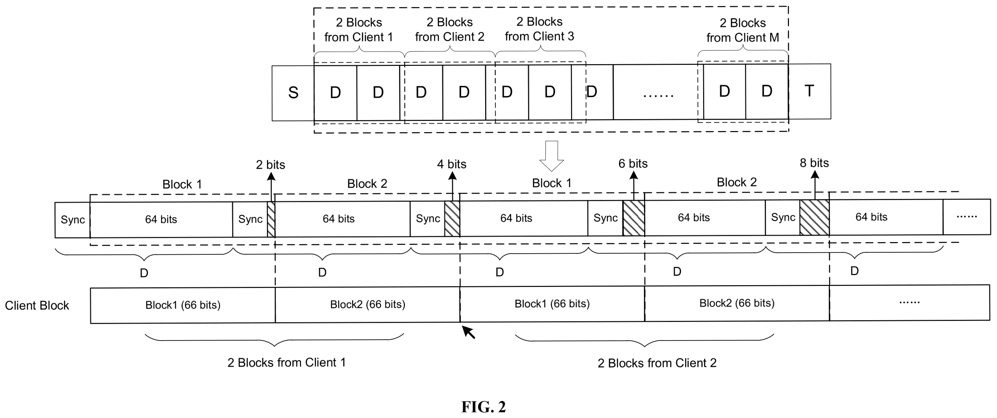

As shown in FIG. 2, taking the fgMTN unit as an example, a client signal (or information) in the fgMTN unit occupies 64-bit portion of the fgMTN unit's 66B block, excluding the 2-bit synchronization header. A client 66B block is 66 bits long (exceeding the 64-bit length that the fgMTN unit's 66B block can occupy). Therefore, one client 66B block needs to occupy the fillable bits of two blocks in the fgMTN unit. The fillable portion of one 66B block in the fgMTN unit cannot correspond one-to-one with one client 66B block, resulting in the 64 bits inside the 66B block of the same fgMTN unit potentially being associated with one or two fgMTN path client blocks (for example, the 64 bits might be filled with 2 bits from the previous fgMTN path client block and 62 bits from the next fgMTN path client block, with the remaining 4 bits of the latter needing to be filled in the next 66B block of the fgMTN unit). In this case, the one or more corresponding fgMTN path client blocks carried within that 66B block need to be replaced with E blocks. (For example, if 64 bits of one fgMTN unit block are filled with 2 bits from the previous fgMTN path client block and 62 bits from the next fgMTN path client block, then during error handling, both the previous and next fgMTN path client blocks need to be replaced with E blocks.) Here, an fgMTN unit refers to a Fine Granularity Multiplex Unit (FGMU) frame carried within an MTN Path (MTNP). Since fgMTN unit is directly carried within the MTN path (MTNP), the fgMTN unit block belongs to an MTNP block.

In the embodiments of the present application, a processing method for error identification for fgMTN path blocks is proposed, thereby effectively ensuring the reliability of fgMTN technology.

Optionally, after the client block is replaced with an E block, when regenerating the fgMTN unit at a transmitting end, the MTN node places the E block into the termination block (T block) or the data block (D block) used to carry the client block, thus obtaining the first target fgMTN unit. That is, the 66B block of the fgMTN unit may use 64 bits of a normal data block or termination block to store the E block of the client signal. In other words, the 66B block of the regenerated fgMTN unit will be a normal data block or termination block, not an E block. Thereafter, optionally, the MTN node may transmit this first target fgMTN unit.

In the embodiments of the present application, by replacing the fgMTN path block carried within an error-marked MTN path block with the error block, specifically after replacing the fgMTN path client block with the error block at a detection end, and then placing the error block into the 64-bit position of the termination block or the data block used to carry the client block at the transmitting end. This enables the transmitted fgMTN unit to be processed normally by subsequent intermediate nodes without needing to be aware of the error blocks carried within the transmitted fgMTN unit. Only at the receiving end of the destination node, are the client blocks parsed so that the presence of the error blocks can be detected.

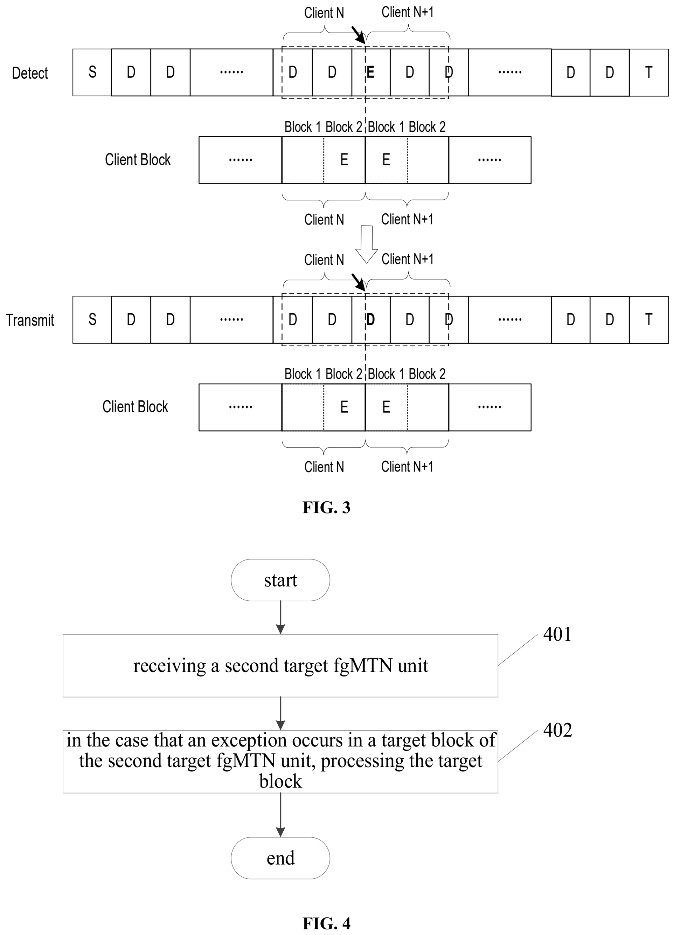

As shown in FIG. 3, which is a schematic diagram of a frame block structure at the detection end (detect end) and the transmitting (transmit end) of an MTN node. For example, in FIG. 3, at the detection end, when an error block is detected in the carried client block, the detected error block is replaced with a data block at the transmitting end.

When the MTN node is configured with a Forward Error Correction (FEC) function, in the case that an exception is detected in an FEC codeword length, a 66B block within an FEC codeword length range is replaced with the error block. When subsequently processing the fgMTN unit, since an FEC error is indicated by an E block, the node may perform processing in accordance with the above-described step 101 and the processing method in which the MTN node regenerates the fgMTN unit at the transmitting end.

In an embodiment of the present application, the fgMTN unit includes a start block (S block), a data block (D block), and a termination block (T block). In addition, the embodiment of the present application further provides a processing method for handling error or abnormal conditions occurring in the above blocks.

Referring to FIG. 4, which is a flowchart of a block processing method provided in an embodiment of the present application and applied to a Metro Transport Network (MTN) node. As shown in FIG. 4, the method includes the following steps.

Step 401: receiving a second target fine grain MTN (fgMTN) unit, wherein
the second target fgMTN unit may refer to any fgMTN unit.

Step 402: in the case that an exception occurs in a target block of the second target fgMTN unit, processing the target block; wherein
the target block includes one or more of the following: a start block, a data block, or a termination block.

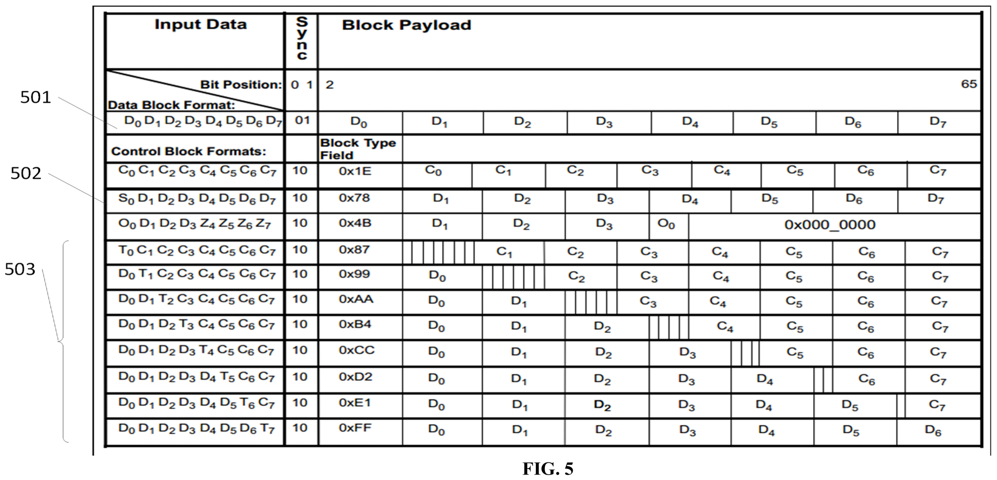

As shown in FIG. 5, 501 represents the structure of a data block, 502 represents the structure of a start block, and 503 represents the structure of a termination block. All of which include a 2-bit synchronization header. By determining the synchronization header or the block type field, the type of error that has occurred in the target block can be determined. For example, if the synchronization header or the block type field is error-marked, the corresponding error is considered to have occurred.

Optionally, when the target block includes different types of blocks, there are different processing methods.

### 1. The target block includes the start block.

In the case that a synchronization header error of the start block occurs, the second target fgMTN unit is discarded; or, in the case that a synchronization header error of the start block occurs, when the target block is determined to be the start block by a determination mechanism (e.g., inferring to be a start block based on other information, such as a data block immediately following the target block), the second target fgMTN unit is read, that is, the second target fgMTN unit is not discarded, and the subsequent content of this fgMTN unit (such as overhead, client block) is still used.

In the case that a block type field error of the start block occurs, the second target fgMTN unit is discarded; or, in the case that a block type field error of the start block occurs, when the target block is determined to be the start block by a determination mechanism (e.g., inferring to be a start block based on other information, such as a data block immediately following the target block), the second target fgMTN unit is read. That is, the second target fgMTN unit is not discarded, and the subsequent content of this fgMTN unit (such as overhead, client block) is still used.

### 2. The target block includes the data block.

In the case that a synchronization header error of the data block occurs:
when the data block carries fgMTN path client information, one or more fgMTN path client blocks carried within a 64-bit payload of the data block are replaced with error blocks; or, when the data block carries overhead information, the overhead information is discarded.

### 3. The target block includes the termination block.

In the case that a block type field error or a synchronization header error of the termination block occurs:
when the termination block carries fgMTN path client information, one fgMTN path client block carried within a 64-bit payload of the termination block is replaced with an error block; or, when the termination block carries overhead information, the overhead information is discarded.

Through the solution provided in the above embodiments, an abnormal handling solution for different types of blocks in an fgMTN unit is proposed, thereby ensuring the uniformity of abnormal conditions handling and the reliability of the MTN network.

Here, the method shown in FIG. 4 can be implemented independently, or in combination with the embodiment shown in FIG. 1.

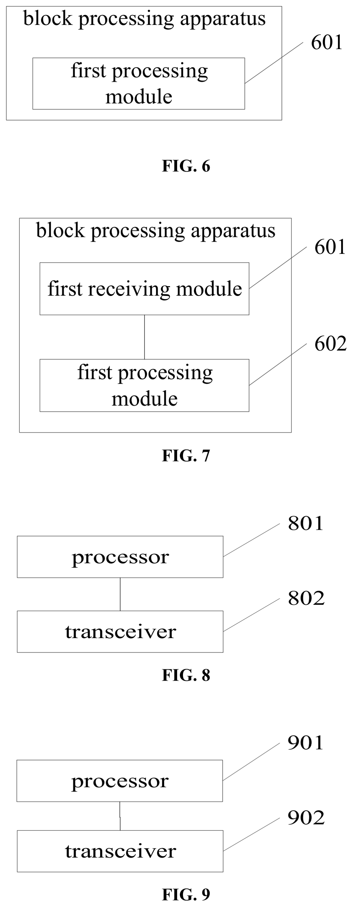

Referring to FIG. 6, which is a structural diagram of a block processing apparatus provided in an embodiment of the present application and applied to a Metro Transport Network (MTN) node. As shown in FIG. 6, the block processing apparatus includes:
a first processing module 601, configured to, when an MTN path block carrying a fine grain MTN (fgMTN) path is error-marked, or the block includes an invalid synchronization header, or the block is a control block with an invalid type field, or the block is an error block, replace the fgMTN path block carried within the MTN path block with an error block.

Optionally, the first processing module is further configured to replace one or more fgMTN path client blocks carried within the MTN path block with error blocks.

Optionally, the apparatus may further include:
a second processing module, configured to replace the error block used to carry the client block into a data block or a termination block, to obtain a first target fgMTN unit.

Optionally, the apparatus may further include:
a transmitting module, configured to transmit the first target fgMTN unit.

Optionally, the MTN node is configured with a Forward Error Correction (FEC) function, and the apparatus may further include:
a third processing module, configured to, in the case that an exception is detected in an FEC codeword length, replace a 66B block within an FEC codeword length range with the error block.

The apparatus provided in the embodiments of the present application can execute the above method embodiments, and the implementation principles and technical effects are similar, which will not be described in detail again herein.

Referring to FIG. 7, which is a structural diagram of a block processing apparatus provided in an embodiment of the present application and applied to a Metro Transport Network (MTN) node. As shown in FIG. 7, the block processing apparatus includes:
a first receiving module 701, configured to receive a second target fine grain MTN (fgMTN) unit; the first processing module 702, configured to, in the case that an exception occurs in a target block of the second target fgMTN unit, process the target block; wherein
the target block includes one or more of the following: a start block, a data block, or a termination block.

Optionally, the target block includes the start block; the first processing module is further configured to:
in the case that a synchronization header error of the start block occurs, discard the second target fgMTN unit; or
in the case that a synchronization header error of the start block occurs, when the target block is determined to be the start block by a determination mechanism, read the second target fgMTN unit; or
in the case that a block type field error of the start block occurs, discard the second target fgMTN unit; or
in the case that a block type field error of the start block occurs, when the target block is determined to be the start block by a determination mechanism, read the second target fgMTN unit.

Optionally, the target block includes the data block; the first processing module is further configured to:
in the case that a synchronization header error of the data block occurs:
when the data block carries fgMTN path client information, replace one or more fgMTN path client blocks carried within a 64-bit payload of the data block with error blocks; or
when the data block carries overhead information, discard the overhead information.

Optionally, the target block includes the termination block; the first processing module is further configured to:
in the case that a block type field error or a synchronization header error of the termination block occurs:
when the termination block carries fgMTN path client information, replace one fgMTN path client block carried within a 64-bit payload of the termination block with an error block; or
when the termination block carries overhead information, discard the overhead information.

The apparatus provided in the embodiments of the present application can execute the above method embodiments, and the implementation principles and technical effects are similar, which will not be described in detail again herein.

Referring to FIG. 8, which is a structural diagram of a block processing apparatus provided in an embodiment of the present application and applied to a Metro Transport Network (MTN) node. As shown in FIG. 8, the block processing apparatus includes: a processor 801 and a transceiver 802;
the processor 801 is configured to, when an MTN path block carrying a fine grain MTN (fgMTN) path is error-marked, or the block includes an invalid synchronization header, or the block is a control block with an invalid type field, or the block is an error block, replace the fgMTN path block carried within the MTN path block with an error block.

Optionally, the processor 801 is further configured to:
replace one or more fgMTN path client blocks carried within the MTN path block with error blocks.

Optionally, the processor 801 is further configured to:
replace the error block used to carry the client block into a data block or a termination block, to obtain a first target fgMTN unit.

Optionally, the processor 801 is further configured to:
transmit the first target fgMTN unit.

Optionally, the MTN node is configured with a Forward Error Correction (FEC) function, and the processor 801 is further configured to:
in the case that an exception is detected in an FEC codeword length, replacing a 66B block within an FEC codeword length range with the error block.

The apparatus provided in the embodiments of the present application can execute the above method embodiments, and the implementation principles and technical effects are similar, which will not be described in detail again herein.

Referring to FIG. 9, which is a structural diagram of a block processing apparatus provided in an embodiment of the present application and applied to a Metro Transport Network (MTN) node. As shown in FIG. 9, the block processing apparatus includes: a processor 901 and a transceiver 902;
the transceiver 902 is configured to receive a second target fine grain MTN (fgMTN) unit;
the processor 901 is configured to, in the case that an exception occurs in a target block of the second target fgMTN unit, process a target block; wherein
the target block includes one or more of the following: a start block, a data block, or a termination block.

Optionally, the target block includes the start block; the processor 901 is further configured to:
in the case that a synchronization header error of the start block occurs, discard the second target fgMTN unit; or
in the case that a synchronization header error of the start block occurs, when the target block is determined to be the start block by a determination mechanism, read the second target fgMTN unit; or
in the case that a block type field error of the start block occurs, discard the second target fgMTN unit; or
in the case that a block type field error of the start block occurs, when the target block is determined to be the start block by a determination mechanism, read the second target fgMTN unit.

Optionally, the target block includes the data block; the processor 901 is further configured to:
in the case that a synchronization header error of the data block occurs:
when the data block carries fgMTN path client information, replace one or more fgMTN path client blocks carried within a 64-bit payload of the data block with error blocks; or
when the data block carries overhead information, discard the overhead information.

Optionally, the target block includes the termination block; the processor 901 is further configured to:
in the case that a block type field error or a synchronization header error of the termination block occurs:
when the termination block carries fgMTN path client information, replace one fgMTN path client block carried within a 64-bit payload of the termination block with an error block; or
when the termination block carries overhead information, discard the overhead information.

The apparatus provided in the embodiments of the present application can execute the above method embodiments, and the implementation principles and technical effects are similar, which will not be described in detail again herein.

It should be noted that the division of units in the embodiments of the present application is schematic and is only a logical function division. In actual implementation, there may be other division methods. In addition, each functional unit in various embodiments of the present application may be integrated into one processing unit, or each unit may exist physically alone, or two or more units may be integrated into one unit. The above integrated unit can be implemented in the form of hardware or software functional unit.

If the integrated unit is implemented in the form of a software functional unit and sold or used as an independent product, it may be stored in a processor-readable storage medium. Based on such an understanding, essential parts, or parts contributing to the prior art, or the entirety or parts of the technical solution of the present application may be implemented in a form of a software product. The computer software product is stored in a storage medium, and includes instructions to cause a computer device (which can be a personal computer, a server, or a network device, etc.) or a processor to execute all or part of the steps of the methods described in various embodiments of the present application. The aforementioned storage media include: Universal Serial Bus (USB) flash disk, removable hard disk, Read-Only Memory (ROM), Random Access Memory (RAM), magnetic disk or optical disc and other media that can store program codes.

The present application provides a communication device, including: a memory, a processor, and a program stored in the memory and used to be executed by the processor; wherein the processor is configured to read the program from the memory to implement the steps in the block processing method described above.

The present application further provides a readable storage medium for storing a program, wherein the program is used to be executed by a processor to implement the various procedures of the above-described block processing method embodiments, and achieve the same technical effects. To avoid repetition, details are not repeated here. The readable storage medium may be any available medium or data storage device that can be accessed by the processor, including but not limited to magnetic storage (e.g., floppy disk, hard disk, magnetic tape, Magneto-Optical disk (MO), etc.), optical storage (e.g., CD, DVD, BD, HVD, etc.), and semiconductor storage (e.g., ROM, EPROM, EEPROM, non-volatile memory (NAND flash), Solid-State Drive (SSD)).

It should be noted that, in the present disclosure, the terms "include," "comprise," or any other variations thereof are intended to cover non-exclusive inclusion. Thus, a process, method, article, or apparatus that includes a series of elements not only includes those elements, but may also include other elements that are not explicitly listed, or elements that are inherent to such process, method, article, or apparatus. Without further limitation, an element defined by the phrase "including a/an ..." does not exclude the existence of additional identical elements in the process, method, article, or apparatus that includes the element.

Through the above description of the implementations, those skilled in the art can clearly understand that the methods of the above embodiments can be implemented by means of software in combination with a necessary general-purpose hardware platform. Obviously, they can also be implemented by hardware, but in many cases the former is a better implementation. Based on this understanding, the technical solution of the present application, in essence, or the part that contributes to the prior art, can be embodied in the form of a software product. The computer software product is stored in a storage medium (such as ROM/RAM, a magnetic disk, or an optical disc) and includes instructions to cause a terminal (which may be a mobile phone, a computer, a server, an air conditioner, or a network device, etc.) to execute the methods described in the various embodiments of the present application.

The above describes embodiments of the present application in conjunction with the accompanying drawings. However, the present application is not limited to the above specific embodiments, which are merely illustrative rather than restrictive. Those of ordinary skill in the art, in light of the teachings of the present application and without departing from the spirit of the present application and the scope of protection defined by the claims, may make many variations and modifications in form, all of which shall fall within the protection scope of the present application.

## Claims

1. A block processing method, performed by a Metro Transport Network (MTN) node, comprising:
when an MTN path block carrying a fine grain MTN (fgMTN) path is error-marked, or the block contains an invalid synchronization header, or the block is a control block with an invalid type field, or the block is an error block, replacing the fgMTN path block carried within the MTN path block with an error block.

2. The method according to claim 1, wherein replacing the fgMTN path block carried within the MTN path block with the error block comprises:
replacing one or more fgMTN path client blocks carried within the MTN path block with the error blocks.

3. The method according to claim 2, further comprising:
placing the error block into a termination block or a data block used to carry the client block, to obtain a first target fgMTN unit.

4. The method according to claim 3, further comprising:
transmitting the first target fgMTN unit.

5. The method according to any one of claims 1 to 4, wherein the MTN node is configured with a Forward Error Correction (FEC) function, and the method further comprises:
in the case that an exception is detected in an FEC codeword length, replacing a 66B block within an FEC codeword length range with the error block.

6. A block processing method, performed by a Metro Transport Network (MTN) node, comprising:
receiving a second target fine grain MTN (fgMTN) unit;
in the case that an exception occurs in a target block of the second target fgMTN unit, processing the target block; wherein
the target block comprises one or more of the following: a start block, a data block, or a termination block.

7. The method according to claim 6, wherein the target block comprises the start block; and processing of the target block comprises:
in the case that a synchronization header error of the start block occurs, discarding the second target fgMTN unit; or
in the case that a synchronization header error of the start block occurs, when the target block is determined to be the start block by a determination mechanism, reading the second target fgMTN unit; or
in the case that a block type field error of the start block occurs, discarding the second target fgMTN unit; or
in the case that a block type field error of the start block occurs, when the target block is determined to be the start block by a determination mechanism, reading the second target fgMTN unit.

8. The method according to claim 6, wherein the target block comprises the data block; and processing the target block comprises:
in the case that a synchronization header error of the data block occurs:
when the data block carries fgMTN path client information, replacing one or more fgMTN path client blocks carried within a 64-bit payload of the data block with error blocks; or
when the data block carries overhead information, discarding the overhead information.

9. The method according to claim 6, wherein the target block comprises the termination block; and processing the target block comprises:
in the case that a block type field error or a synchronization header error of the termination block occurs:
when the termination block carries fgMTN path client information, replacing one fgMTN path client block carried within a 64-bit payload of the termination block with an error block; or
when the termination block carries overhead information, discarding the overhead information.

10. A block processing apparatus, applied to a Metro Transport Network (MTN) node, comprising:
a first processing module, configured to, when an MTN path block carrying a fine grain MTN (fgMTN) path is error-marked, or the block contains an invalid synchronization header, or the block is a control block with an invalid type field, or the block is an error block, replace the fgMTN path block carried within the MTN path block with an error block.

11. A block processing apparatus, applied to a Metro Transport Network (MTN) node, comprising:
a first receiving module, configured to receive a second target fine grain MTN (fgMTN) unit;
a first processing module, configured to, in the case that an exception occurs in a target block of the second target fgMTN unit, process the target block; wherein
the target block comprises one or more of the following: a start block, a data block, or a termination block.

12. A block processing apparatus, applied to a Metro Transport Network (MTN) node, comprising: a processor and a transceiver;
the processor is configured to, when an MTN path block carrying a fine grain MTN (fgMTN) path is error-marked, or the block contains an invalid synchronization header, or the block is a control block with an invalid type field, or the block is an error block, replace the fgMTN path block carried within the MTN path block with an error block.

13. A block processing apparatus, applied to a Metro Transport Network (MTN) node, comprising: a processor and a transceiver;
the transceiver is configured to receive a second target fine grain MTN (fgMTN) unit;
the processor is configured to, in the case that an exception occurs in a target block of the second target fgMTN unit, process the target block; wherein
the target block comprises one or more of the following: a start block, a data block, or a termination block.

14. A communication device, comprising: a memory, a processor, and a program stored in the memory and used to be executed by the processor; **characterized in that** the processor is configured to read the program in the memory to implement the steps of the block processing method according to any one of claims 1 to 9.

15. A readable storage medium for storing a program, wherein the program is used to be executed by a processor to implement the steps of the block processing method according to any one of claims 1 to 9.
